# EUROPEAN PATENT APPLICATION

(11) **EP 1 968 265 A1**
(43) Date of publication of application: **10.09.2008**
(21) Application number: 07121812.7
(22) Date of filing: 28.11.2007
(51) Int. Cl.: H04L 12/58, H04L 29/06

(54) **Method and system for securely transmitting electronic mail**

(30) Priority: 07.02.2007 US 888589 P
(71) Applicant: Comodo CA Limited, 3rd Floor Building 26 Office Village Exchange Quay Trafford Road Salford Manchester, M5 3EQ (GB); Abdulhayoglu, Melih, Jersey City, NJ 07310 (US)
(72) Inventor: Abdulhayoglu, Melih, Jersey City, NJ NJ 07310 (US); McGillian, Shane, Manchester, Greater Manchester M5 3EQ (GB)
(74) Representative: Brandon, Paul Laurence

(57) **Abstract**

A method of encrypting email where a email is intercepted from an email sender, a public and private key pair is generated, and the private key is used to encrypt the email. A secure connection is then established with a server and the private key is sent to the server. The email is sent to the recipients who then connects to the server. The server performs authentication on the recipients. The recipients request the private key from the server which is returned by the server. The email is then decrypted using the returned private key.

## Description

### CROSS-REFERENCE TO RELATED APPLICATION

This application claims the benefit of provisional application Ser. No. 60/888,589, filed February 7, 2007, which is incorporated entirely herein by reference.

### BACKGROUND

Electronic mail or "email" has become one of the main methods of communication within our society. Negotiations, deals, and confidential business communication all occur over the internet. Likewise, with the advances in email and the increased frequency of email use, the dangers of using email have become more prevalent. Fraudsters and other security threats can intercept email and use it for their personal gain. Confidential information can be intercepted and published on the web by hackers or fraudsters. Because of the increased number of threats and higher risk associated with online communication, there is a need for a method that increases the security of email and assures users that their emails are being transmitted and received without interruption or compromise.

One main approach that is used to secure emails is to encrypt the message along with any attachments according to a pre-approved encryption scheme. In this approach, requires both the sender and the recipient to have the same encryption mechanism and same encryption method. Securing the email can be done using Public Key Infrastructure (PKI) based digital certificate to encrypt the email, but the current use of this method requires that the email sender have the recipient's public key certificate installed on his or her computer prior to the encryption. The email is then encrypted using the recipient's public key which is in the recipient's public key certificate. Hence, known methods required an already available digital certificate prior to any encryption.

Therefore, there is a need for an encryption mechanism that can be used without a prior agreement between the parties. There is a need to send secure messages prior to the recipient receiving the message and without both parties having to communicate and work together to establish a pre-approved encryption scheme.

### SUMMARY OF THE INVENTION

The disclosed invention allows users to send and receive secured and encrypted emails even if an email certificate has not been installed by the intended recipient prior to the email's encryption. The invention works by generating a public and private key pair with the public key being placed into a self-signed public key certificate. The private key is used to encrypt the message and the then encrypted message is then sent to the recipient. The private key or key pair is then sent to a server using a secure connection. Upon receipt of the encrypted email, the recipient connects to the server and requests the private key. The server validates the recipient and sends the private key to the recipient. The recipient then decrypts the email. Optionally, the decrypted email replaces the encrypted email to keep the recipient's inbox clean. The above scheme can also be applied to a symmetric shared-secret which replaces the public key, private key and digital certificate. Otherwise, the process is the same.

During the validation of the recipient, the server can obtain the recipient's "real" email certificate for validation purposes. The applicant's "real" email certificate is an email certificate issued by a trusted third party such as a Certificate Authority. "Real" email certificates are typically, although not necessarily, verified during the issuance process to ensure the validity of the data contained therein. In terms of email certificates, the verification can include a) sending an email to the email address associated with the email certificate, or b) having a system administrator verify the email address on the user's behalf. The server or recipient's computer can then send the real email certificate to the email sender for future use.

In an alternate embodiment, the encrypted email is sent to a server (or to the recipient who then forwards the encrypted email to the server). The server generates a notification email about the existence of the encrypted email. The notification email is sent to the recipient with a web link to the server. The recipient then browses to the server where they are authenticated. After they are authenticated, the server uses the private key to decrypt the encrypted email. The email is then displayed in the recipient's browser for them to read.

In another alternate embodiment, the encrypted email is sent to a mail server. The mail server downloads the key from the server and decrypts the encrypted email for the recipient.

A password can also be required before allowing the recipient to read the email. Other authentication methods can also be used, i.e. finger print scanner, a digital certificate, or any other authentication scheme.

An image of the sender or some other identified can be sent to the recipient through the non-encrypted email, the email generated by the server, or with the notification link to help the recipient know that the email and source can be trusted.

### BRIEF DESCRIPTION OF THE DRAWINGS

Figure 1 is a flowchart of the different steps of one embodiment of the invention

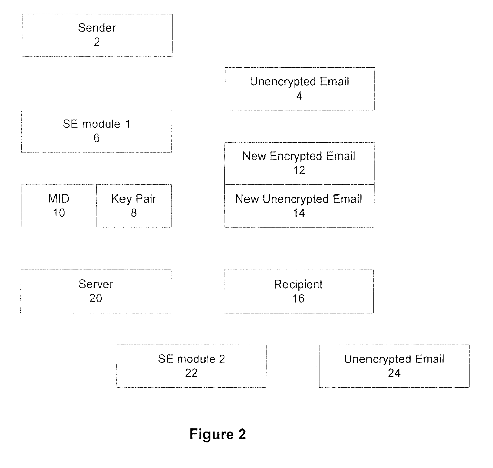

Figure 2 depicts the different components and parts of the invention.

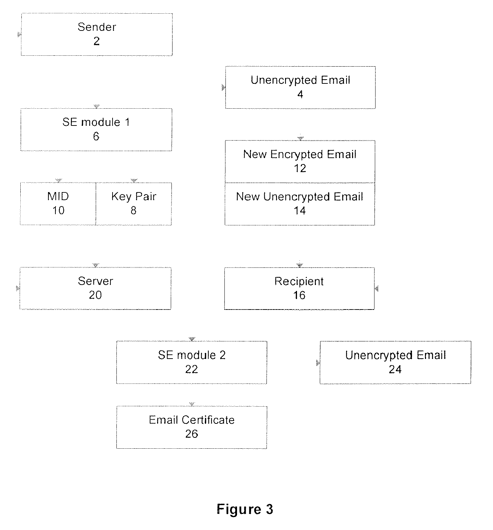

Figure 3 depicts a different embodiment of the invention where the sender is provided with the recipients real email certificate.

Figure 4 depicts a third embodiment of the invention where the server displays the email in a web browser

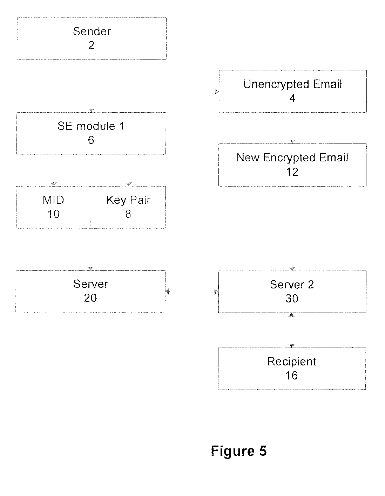

Figure 5 depicts a fourth embodiment of the invention where a mail server is used with the invention

Figure 6 depicts a fifth embodiment of the invention where a password is required from the recipient.

### DETAILED DESCRIPTION

The disclosed invention is a process of sending and receiving encrypted electronic mail ("email") to a party for whom an e-mail certificate (also referred to as a "public key digital certificate" or "digital certificate" or "certificate" herein) is not already know, present, or installed on the sender's computer. The disclosed invention ensures that the receiver can decrypt the message after it is received and provides for validation of the recipient's identity. The preferred embodiment of the invention only allows the receiver to decrypt the message if certain set criteria are met, such as signing up for and correct installing and configuring an e-mail certificate.

The term SE module as used herein refers to all forms of code or software that can be used to accomplish the tasks set forth, including software plug-ins or extensions, data from other network stack monitoring and interception code, a stand-alone email application, a separate application, a separate mail server of mail appliance, or any other device where the method can be implemented either in a plurality of devices (such as multiple plug-ins), a combination of devices (network code in addition to a plug-in), or a single device.

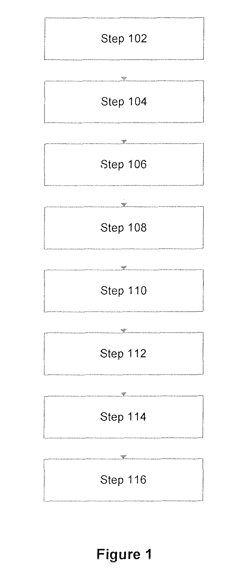

Figure 1 depicts the steps used in the invention. In Step 102, the email sender 2 (or "sender") has created an email 4 that needs to be sent to one or more recipients 16. The sender 2 has included any attachments desired and may have even pressed the "send" button of their email application. The email message created can be signed or unsigned and may be in any format desired.

In Step 104, the SE module 6 residing on either the mail server or the sender's computer intercepts the email being sent 4 and determines whether a public key is already known for the intended recipient 16. Generally, the SE module 6 will check in the windows certificate store for the applicable digital certificate, but the SE module 6 could also access other certificate databases from proprietary and/or third party databases or even remote locations as well. The SE module 6 can be initiated upon the user's pressing the "send" button on their email application, by the email server upon receipt of the email or upon the email being forwarded from the email server, by having the user select to initiate the SE module, or any other method that might be used to initiate a software plug-in, application, or routine or a stand alone application, appliance, or device where all connections to the application are encrypted.

If a key pair is not available, then, in Step 106, the SE module 6 generates a private and public key pair 8. The public key is placed into a certificate which is self-signed using the private key rather than root-signed and include the sender's email address as the certificate's subject. After being generated, the public key certificate is placed in a certificate storage area accessible to the sender's computer.

In Step 108, the SE module 6 generates a unique MessageID (MID) 10, which may occur at substantially the same time as the generation of key pair 8. The MID 10 is a hash (typically 20-bytes) used to identify the generated key pair. The MID 10 can created using certain selected informational details about the email being sent 4 , can be a set of random data, or can be a combination of both random and email specific data. Information used to generate the MID can include, but is not limited to, a hash of the receiver's email address, the recipient's email address, the system time, and a sequence id. The sequence ID can be an incremental counter used to "salt" the MID. The counter is not required to be persistent and need not be sequential. However, a sequential count is useful as it can be incremented after generating each MID and can start over once the highest value in the sequence is reached. An incremental counter prevents the possible confusion that could occur if two mails from being sent at the same system time (which would result in a non-unique MID).

In Step 110, the email 4 is encrypted with the session private key, and signed with the sender's e-mail certificate, to the S/MIME standard as defined in RFC3850 and 3851.

In Step 112, the now signed and encrypted email 12 is included in a new non-encrypted email 14 that is generated by the SE module. The new non-encrypted email 14 generated by the SE module 6 can be in any email format. The encrypted email 12 can be included in the new non-encrypted email 14 using any standard form of inclusion, including attaching it to the email or embedding the encrypted message into the new unencrypted message. The MID 10 is included with the new non-encrypted email 14, usually as part of the message's header.

The new non-encrypted email 14 can be blank or can include a human-readable message detailing the steps that need to be taken in order to decrypt the attached encrypted message. The message in the non-encrypted email 14 is typically generated by the SE module 6. Optionally, the new message 14 can be customized by the email sender 2 prior to being sent on to the recipient 16. Additionally, the non-encrypted email can include an image of the sender or some other identifying mark to assist the recipient in identifying and trusting the email sender. The image file can be embedded in the email using any standard embedding techniques.

In Step 114, the new unencrypted email 14, along with the encrypted original email 12, is sent to the selected recipient 16 via standard email transmission routines. The new email should, but does not have to be, signed by the sender's email certificate prior to being sent to the recipient in order to ensure the integrity of the e-mail. The certificate is transmitted along with the signed and encrypted original email.

In Step 116, (which may actually occur prior to Step 110, 112, or 114), the sender's computer connects to a server 20 using an encrypted connection, in the preferred embroilment of the invention this is facilitated using SSL. During the connection, the SSL certificate from the server is examined to ensure that it is a valid and correct domain. After the connection is established, the SE module 6 sends the private key or key pair 8 to the server 20. For security reasons, the transferred information can be packaged together into the PKCS #12: Personal Information Exchange Syntax Standard format. The MID 10 is transmitted at the same time, typically as the password for the PKCS#12. The private key or PKCS#12 is then stored on the server 20 in any known manner.

In Step 118, the recipient 16 receives the non-encrypted email 14 and encrypted attachment 12. The recipient 16 follows the instructions contained in the non-encrypted email 14 in order to decrypt the encrypted attachment 12. In order to decrypt the message, the recipient 16 will be instructed to download the SE module 22 (or a separate SE module used for decrypting encrypted emails).

In Step 120, the SE module on the recipient's computer or network 22 establishes a secure connection to the server 20 where the recipient 16 is authenticated for his or her identity using standard PKI authentication routines. If a certificate does not exist for the user and the recipient has not obtained a certificate elsewhere, the certificate for authentication can be created directly from the SE module 22. The SE module 22 can also use a certificate already assigned to the recipient. Because a secure encrypted connection is being made with the server 20, the recipient's real public key certificate is supplied by the SE module to the server during the client authentication process. One process of the SSL client authentication handshake forces the recipient's computer to perform a private key operation. The private key operation (which can be an encryption or decryption operation) cryptographically proves the recipient's identity, via ownership of the private key corresponding to the public key in the e-mail certificate, to the server and verifies that the recipient is the intended recipient of the message. The server's authentication process also checks the email address in the recipient's email certificate against the e-mail address the original e-mail was sent to by the sender to ensure that they are the same. The server's authentication process checks the email address in the recipient's email certificate against a known trusted root to confirm that the recipient is the intended recipient of the email. The server authenticates the recipient by proving ownership of the private key associated with the supplied public key certificate through requesting proof a successful private key encryption or decryption. The authentication ensures that unauthorized parties are not provided access to the session private key and prevents unauthorized decryption of the message as it protects the session private key from potential email thieves. At this point, the public key of the recipient's real email certificate, or the e-mail certificate itself can be provided to the server which can then distribute the recipient's real key to other email senders so that future email communications will be encrypted using a typical email encryption scheme. Of course the certificate could also be transmitted to other parties through a signed email or in any other manner.

At the same time the recipient's connection to the server 20 occurs, or later if desired, the SE module gathers the recipient's email certificate 26. The SE module then sends the email certificate 26 to the original email sender 2 by creating a new message and signing it with the recipients real e-mail certificate. The signed mail is then transmitted over the e-mail system back to the sender. The original email sender's SE module intercepts the email from the recipient 16 and the recipient's email certificate 26 is extracted and installed on the sender's computer.

Once the encrypted connection is established and the recipient sufficiently validated, the SE module 22 requests the private key or key pair 8 from the server 20 using the MID 10 found in the unencrypted email's 14 message header. The MID 10 is transmitted to the server 20 as well

In Step 122, the server 20 responds to the request by transferring the previously uploaded PKCS#12 to the recipient 16 over the established secure connection The recipient's SE module 16 may then use the private key to decrypt the encrypted email 4 into a format that is readable 24.

Optionally, the encrypted version of the message 12 and/or the unencrypted email 14 can be deleted and replaced with a decrypted version 24 of the same message in order to avoid having duplicate emails in the recipient's mail box.

Optionally, the entire system can be performed with a symmetric key system, which replaces the public and private key and certificate where the e-mail is encrypted with the symmetric key; the symmetric key is uploaded to the server and stored; the recipient is authenticated; the symmetric key is downloaded by the SE module; the e-mail is then decrypted. Using a symmetric key system eliminates the need for the public and private key to be generated and used.

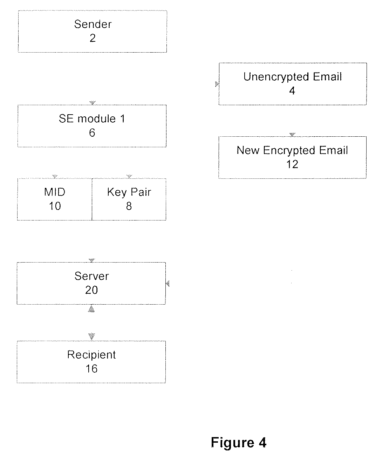

In an alternate embodiment of the invention shown in Figure 4, the encrypted email 14 is sent to the server 20 along with the private key 8. The server 20 then sends notification of the email 14 to the recipient 16. The notification contains a link on where the recipient can go to read the email 14. The recipient 16 then browses to the server 20 and connects over a secure connection. Validation is performed as above and the email 12 is then decrypted using the private key 8 on the server 20. The server 20 then shows the recipient 16 the unencrypted email through the browser on the recipient's computer.

In another alternative similar to the one shown in Figure 4, the email is sent to a server separate from the server receiving the private key from the sender 30. The second server 30 receiving the email requests the email key from the server 20 that received the private key. The recipient 16 establishes a secure connection with the second server 30. The second server 30 decrypts the email 12 using the private key 8 and instructs the recipient's browser to display the unencrypted form of the sent email. This variation allows the user to view the email on their mail server using their browser.

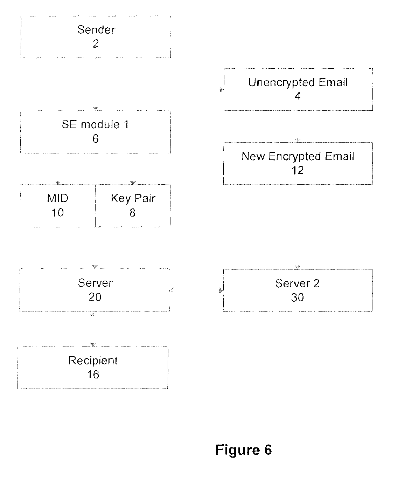

In another embodiment that is also illustrated by Figure 6, the encrypted email is sent to a computer separate 30 from the server 20. The computer 30 then forwards the email 12 to the server 20 from any email address. The server 20 sends the notification to the recipient 16 which can be in the form of a link to the server 20. The recipient 16 then browses to the server over SSL. The server 20 then requests a password from the recipient 16 or browser. The server 20 checks the password against the password stored by the separate computer 30. The separate computer can also do the comparison. If the passwords match then the server 20 decrypts and displays the message as explained above. A password could also be used on the other embodiments if so desired. The password can be uploaded by the sender or sent to the recipient in some other fashion such as through a postage letter. In addition, other forms of verification can be used to increase security such as fingerprint scans, retina scans, etc.

The invention is not restricted to the details of the foregoing embodiment and the example provided are only one of many possible ways in which the invention as claimed can be accomplished. The order of the steps presented above is not the only order in which the steps may be taken. The invention extends to any novel one, or any novel combination, of the features disclosed in this specification (including any accompanying claims, abstract and drawings), or to any novel one, or any novel combination, of the steps of any method or process so disclosed.

## Claims

1. A method of encrypting email comprising the steps of
intercepting at least one email from an email sender
generating at least one public and private key pair,
encrypting at least one intercepted email;
creating at least one encrypted connection to a server;
sending at least one private key to the server over at least one encrypted connection;
sending at least one encrypted email to at least one recipient
having at least one encrypted connection between the server and at least one recipient
having the server authenticate at least one recipient
having at least one recipient request the at least one private key from the server having the server return at least one private key; and
decrypting the email using at least one private key returned by the server.

2. A method of encrypting email according to claim 1, where at least one public key is stored in at least one public key certificate that is self-signed using a corresponding private key.

3. A method of encrypting email according to claim 2, where the subject of at least one public key certificate is at least one of the recipient's email address.

4. A method of encrypting email according to claim 1, where the server is a secure server hosted by a trusted third party.

5. A method of encrypting email according to claim 1, where the server authenticates at least one recipient by examining at lest one digital certificate associated with the recipient

6. A method of encrypting email according to claim 5, where the server checks that at least digital certificate associated with the recipient has been signed by a known trusted root.

7. A method of encrypting email according to claim 5, where the server compares at least one email address associated with a digital certificate that is associated with at least one recipient to at least one email address that is the same address as the email intercepted from the email sender.

8. A method of encrypting email according to claim 1, where the server authenticates at least one recipient by proving the recipient has ownership of the private key corresponding to the recipients supplied public key.

9. A method of encrypting email according to claim 8 where the recipient's ownership of the private key is proved by requesting data from a successful private key operation.

10. A method of encrypting email according to claim 1, where the server is provided with at least one email certificate associated with at least one recipient.

11. A method of encrypting email according to claim 10, where the server is provided with at least one email certificate when the server authenticates at least one recipient.

12. A method of encrypting email according to claim 10, where the server sends at least one email certificate provided to the email sender.

13. A method of encrypting email according to claim 12, where the server sends the at least one email certificate by receiving at least one signed email certificate that is signed by at least one recipient's private key.

14. A method of encrypting email according to claim 13 where the email certificate sent to the email sender is part of an email generated by the server sending the email.

15. A method of encrypting email according to claim 13 where the email certificate is intercepted and the email certificate is extracted and installed on the email sender's computer.

16. A method of encrypting email according to claim 1 where at least one encrypted email is sent with a second non-encrypted email.

17. A method according to claim 16, where the at least one encrypted email is embedded in the second non-encrypted email.

18. A method according to claim 16, where at least one identifier of the email sender is sent to at least one recipient.

19. A method according to claim 18, where at least one identifier is an image file.

20. A method of encrypting email comprising the steps of
intercepting at least one email from an email sender
generating at least one public and private key pair,
encrypting at least one intercepted email;
creating at least one encrypted connection to a server;
sending at least one private key to the server over the at least one encrypted connection;
sending at least one encrypted email
having at least one computer receive at least one encrypted email
sending notification of at least one encrypted email to at least one recipient having at least one recipient establish a secure connection to at least one computer that received an encrypted email
decrypting the received encrypted email using at least one of the generated private keys
displaying the contents of at least one encrypted email using the secure connection to the computer that received at least one encrypted email.

21. A method of encrypting email according to claim 20, where at least one public key is stored in at least one public key certificate that is self-signed using a corresponding private key.

22. A method of encrypting email according to claim 21, where the subject of at least one public key certificate is at least one of the recipient's email address.

23. A method of encrypting email according to claim 20, where the server is a secure server hosted by a trusted third party.

24. A method of encrypting email according to claim 20, where the server authenticates the recipient by examining at lest one digital certificate associated with at least one recipient

25. A method of encrypting email according to claim 24, where the server checks that at least one digital certificate associated with the recipient has been signed by a known trusted root.

26. A method of encrypting email according to claim 24, where the server compares at least one email address associated with a digital certificate that is associated with at least one recipient to at least one email address that is the same address as the email intercepted from the email sender.

27. A method of encrypting email according to claim 20, where the server authenticates at least one recipient by proving the recipient has ownership of the private key corresponding to a supplied public key.

28. A method of encrypting email according to claim 27 where the recipient's ownership of the private key is proved by requesting data from a successful private key operation.

29. A method of encrypting email according to claim 20, where the displaying of the contents of at least one encrypted email is through a web-browser on a recipient's computer.

30. A method according to claim 20 where the notification is a link sent through an email to at least one recipient.

31. A method according to claim 20 where the computer that received at least one encrypted email is the server receiving at least one private key over the first encrypted connection.

32. A method according to claim 20 where the computer that received at least one encrypted email is separate from the server receiving at least one private key over at least one encrypted connection.

33. A method according to claim 32 where the computer that received at least one encrypted email is a mail server.

34. A method according to claim 20 where the server requests at least one password from at least one recipient.

35. A method according to claim 32 where at least one password requested from at least one recipient is compared to at least one password stored on a computer separate from the server.

36. A method according to claim 20, where the notification includes at least one identifier of the email sender.

37. A method according to claim 36, where at least one identifier of the email sender an image file.

38. A system of encrypting email comprising
a server,
a computer sending an email,
an email,
a means of intercepting the email,
a private key,
a means of encrypting the email using the private key,
a means of establishing a secure connection between the server and the computer sending the email,
a recipient,
a means of establishing a secure connection between the server and the recipient; and
a means of decrypting the email using the private key

39. A system according to claim 38, where the private key is generated upon the interception of the email.
